# EUROPEAN PATENT APPLICATION

(11) **EP 2 637 089 A2**
(43) Date of publication of application: **11.09.2013**
(21) Application number: 13157542.5
(22) Date of filing: 04.03.2013
(51) Int. Cl.: G06F 3/0488

(54) **Handheld devices and controlling methods using the same**

(30) Priority: 06.03.2012 TW 101107416; 20.09.2012 TW 101134408
(71) Applicant: Acer Incorporated, Taipei Hsien 221 (TW)
(72) Inventor: Yao, Mei-Ling, 221 Taipei Hsien (TW); Lu, Yi-Wei, 221 Taipei Hsien (TW); Li, En-Chuan, 221 Taipei Hsien (TW)
(74) Representative: Becker Kurig Straus

(57) **Abstract**

Controlling methods for handheld devices with a touch display unit are provided. The controlling method includes the steps of: detecting a sliding gesture on the touch display unit when the handheld device is locked; in response to the detected sliding gesture, displaying at least one indication data on the touch display unit, wherein the indication data includes an indication object and the indication object rotates/flips around a central axis of the touch display unit and a rotating/flipping status of the indication object indicates an unlocking status in response to a detected contact position corresponding to the sliding gesture; and determining whether to unlock the handheld device according to the rotating/flipping status of the indication object.

## Description

### CROSS REFERENCE TO RELATED APPLICATIONS

This Application claims priority of Taiwan Application No. 101107416, filed on March 06, 2012 and Taiwan Application No. 101134408, filed on September 20, 2012, and the entirety of which are incorporated by reference herein.

### BACKGROUND OF THE INVENTION

### Field of the Invention

The disclosure relates generally to handheld devices and related controlling methods, and, more particularly, to handheld devices and related controlling methods capable of unlocking a handheld device with a touch display unit which is in a locked status.

### Description of the Related Art

Recently, handheld devices, such as mobile phones, smart phones or PDAs (Personal Digital Assistants), have become more and more technically advanced and multifunctional. Because of the conveniences of these devices, the devices have become necessities of life.

For some handheld devices, such as smart phones, PDAs, tablet PCs, a touch screen which is directly touchable may be provided as a main input device for users to control functions thereof. Users of the handheld devices can slide their fingers to touch the items displayed by the touch screen to issue a command, and perform or control operations corresponding to the selected items. For example, users can click on a drawing button or icon displayed on the touch screen to activate a drawing function, or can click on a navigation button or icon displayed on the touch screen to activate a GPS navigation function.

To prevent users from unknowingly and inadvertently touching buttons of the handheld device or the touch screen that results in misuse and for power saving considerations, currently, most of the handheld devices are equipped with a lock function. Once the lock function is activated, the handheld device is operated in a lock state, and the user must use the defined unlocking method to unlock and re-operate the handheld device.

However, existing handheld devices mostly indicate the sliding status through a graphic display, and the user has to drag a specified object to complete the unlocking operation. The user cannot intuitively determine the status of the unlocking operation. For example, a button below the touch screen of Apple^{™}'s iPhone for system unlocking. When the button to unlock is pressed by the user, the touch screen may initiate a display and accept a user input. The touch screen may also indicate the straight-line unlocking rod so that only when the user's finger touches the touch screen and control the rod to the designated location will the handheld device disengage the lock state and enter the preset desktop status or the screen previously presented prior to the unlocking.

Therefore, it is desired to provide a method for easily unlocking the handheld device for convenience of users.

### BRIEF SUMMARY OF THE INVENTION

Handheld devices and controlling methods thereof are provided.

In an embodiment of a controlling method, applied to a handheld device, at least comprising a touch display unit, a sliding gesture is first detected on a first region of the touch display unit when the handheld device is locked and indication data is displayed on a first position of a second region of the touch display unit which is outside of the first region in response to the detected sliding gesture, wherein the indication data indicates an unlocking status for the handheld device and the indication data displayed on the first position is updated in response to a detected contact position where the sliding gesture contacts the touch display unit. Thereafter, it is determined whether to unlock the handheld device according to the indication data.

An embodiment of a handheld device comprises a storage unit, a touch display unit and a processing unit. The storage unit comprises at least one lock screen, wherein the lock screen comprises a first region and a second region which is outside of the first region. The processing unit is arranged for displaying the first region and the second region on the touch display unit when the handheld device is locked and upon detecting the sliding gesture on the first region, displaying indication data on a first position of the second region in response to the detected sliding gesture and determining whether to unlock the handheld device according to the indication data, wherein the indication data indicates an unlocking status for the handheld device and the indication data displayed on the first position is updated in response to a detected contact position where the sliding gesture contacts the touch display unit.

In another embodiment of a controlling method, applied to a handheld device, at least comprising a touch display unit, a sliding gesture is first detected on the touch display unit when the handheld device is locked. Thereafter, in response to the detected sliding gesture, at least one indication data is displayed on the touch display unit, wherein the indication data includes a indication object and the indication object rotates/flips around a central axis of the touch display unit in response to a detected contact position corresponding to the sliding gesture and a rotating/flipping status of the indicate object indicating an unlocking status for the handheld device. Then, it is determined whether to unlock the handheld device according to the rotating/flipping status of the indication object. The handheld device is unlocked or an application corresponding to the indication object is activated when an angle that the indication object rotates/flips around the central axis of the touch display unit has exceeded a designated angle and the handheld device is kept locked when the angle that the indication object rotated/flipped around the central axis of the touch display unit has not exceeded the designated angle.

Another embodiment of a handheld device comprises a storage unit, a touch display unit and a processing unit. The storage unit comprises at least one lock screen. The processing unit is arranged for detecting a sliding gesture on the touch display unit when the handheld device is locked, displaying at least one indication data on the touch display unit in response to the detected sliding gesture, wherein the indication data includes a indication object which rotates/flips around a central axis of the touch display unit in response to a detected contact position corresponding to the sliding gesture and a rotating/flipping status of the indicate object indicating an unlocking status for the handheld device, and determining whether to unlock the handheld device according to the rotating/flipping status of the indication object. The processing unit further unlocks the handheld device or activates an application corresponding to the indication object when the angle that the indication object has rotated/flipped around the central axis of the touch display unit has exceeded a designated angle, and the processing unit keeps the handheld device locked when the angle that the indication object rotated/flipped around the central axis of the touch display unit has not exceeded the designated angle.

In another embodiment of a controlling method, applied to a handheld device, at least comprising a touch display unit, a screen is displayed when the handheld device is locked. Then, a contact is detected on the touch display unit and the screen is divided into a plurality of sub-screens in response to the detected contact. In response to a sliding gesture on the touch display unit, the pluralities of sub-screens are updated to display a visual effect where the plurality of sub-screens rotate/flip around a central axis of the touch display unit. Thereafter, when a predetermined angle that the plurality of sub-screens has rotated/flipped around the central axis of the touch display unit, the handheld device is unlocked or an application is activated, wherein the rotating/flipping status of the plurality of sub-screens indicate an unlocking status for the handheld device and the rotating/flipping statuses of the plurality of sub-screens are updated in response to a detected contact position on the touch display unit corresponding to the sliding gesture.

Controlling methods may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of a handheld device of the invention;

Fig. 2 is a flowchart of an embodiment of a controlling method of the handheld device of the invention;

Figs. 3A to 3F are schematic diagrams illustrating an embodiment of user operations and variation in the indication data of the lock screen of the invention;

Figs. 4A to 4F are schematic diagrams illustrating another embodiment of user operations and variation in the indication data of the lock screen of the invention;

Figs. 5A to 5F are schematic diagrams illustrating another embodiment of user operations and variation in the lock screen of the invention;

Fig. 6 is a schematic diagram illustrating another embodiment of a handheld device of the invention;

Figs. 7A to 7F are schematic diagrams illustrating another embodiment of user operations and variation in the indication data of the lock screen of the invention;

Fig. 8 is a flowchart of another embodiment of a controlling method of the handheld device of the invention; and

Figs. 9A to 9H are schematic diagrams illustrating another embodiment of user operations and variation in the indication data of the lock screen of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

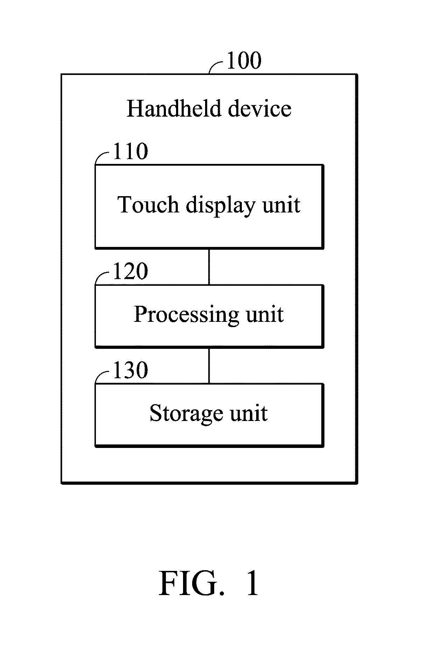

Fig. 1 is a schematic diagram illustrating an embodiment of a handheld device of the invention. The handheld device 100 may be, for example, a smart phone, a PDA (Personal Digital Assistant), a laptop computer or a tablet computer. However, it is to be understood that the invention is not limited thereto. The handheld device 100 has a lock status and an unlock status. The handheld device 100 may at least comprise a touch display unit 110, a processing unit 120 and a storage unit 130. It is understood that, in some embodiments, the touch display unit 110 may be integrated with a touch-sensitive device (not shown). The touch-sensitive device has a touch-sensitive surface comprising sensors in at least one dimension to detect contact and movement of at least one object (input tool), such as a pen/stylus or finger near or on the touch-sensitive surface. The touch display unit 110 can display related data, such as texts, figures, interfaces, and/or information. For example, the touch display unit 110 can display a lock screen when the handheld device 100 is in the lock status (i.e. when the handheld device 100 is locked) and can also display default desktop or environments when the handheld device 100 is in the unlock status (i.e. when the handheld device 100 is unlocked).

The storage unit 130 may store a plurality of desktop or environment data, at least one lock screen and a number of gesture recognition data. The gesture recognition data within the storage unit 130 may further be provided to the processing unit 120 for subsequent determination of the type of gesture input. The processing unit 120 which is coupled to the touch display unit 110 can perform the controlling method of the handheld device of the present invention, which will be discussed further in the following paragraphs.

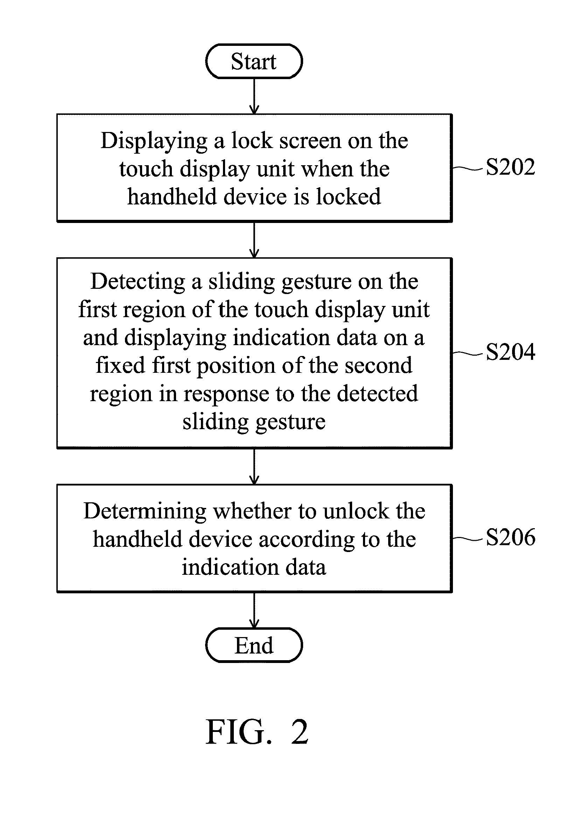

Fig. 2 is a flowchart of an embodiment of a controlling method of the handheld device of the invention. Please refer to Figs. 1 and 2. The controlling method can be applied to a handhand device, such as a portable device, e.g. a PDA, a PDA phone, a smart phone, a mobile phone, an MID, a laptop computer, a tablet computer, a car computer, a digital camera, a multi-media player, a game device, or any other type of handheld device. However, it is to be understood that the invention is not limited thereto. It is to be noted that, in this embodiment, the handheld device 100 comprises a touch display unit 110 and a processing unit 120, wherein the handheld device 100 is in the lock status.

First, in step S202, the processing unit 120 displays a lock screen 200 on the touch display unit 110, wherein the lock screen 200 includes a first region 210 and a second region 220 which is outside of the first region 210. In some embodiments, the first region 210 may be displayed directly as a portion of the lock screen 200 or may be displayed only when a contact on the touch display unit 110 has occurred. In other words, both the first region 210 and the second region 220 may not be displayed until the processing unit 120 detects a contact on the touch display unit 110. In this embodiment, the first region 210 is displayed in response to a contact position detected on the touch display unit 110 for helping a user in subsequent operations.

When the handheld device 100 has been locked, the processing unit 120 detects operations of a user of the handheld device 100, such as determining whether any finger has touched the touch display unit 110, and when detecting the operations of the user of the handheld device 100, determines whether it represents an unlock operation. Assume that the user wishes to use the handheld device 100 after it has been locked, as the handheld device 100 is in the lock status, the user has to unlock the handheld device 100 to perform operations on the handheld device 100. Thus, the user may contact the touch display unit 110 with the finger to request to perform the unlock operation. Accordingly, in step S204, when the handheld device 100 is locked, the processing unit 120 detects a sliding gesture on the first region 210 and displays indication data on a fixed first position of the second region 220 in response to the detected sliding gesture. Note that the indication data is used for indicating an unlocking status for the handheld device 100 and the indication data displayed on the first position is updated accordingly in response to a detected contact position where the sliding gesture contacts the touch display unit 110. In other words, the processing unit 120 may detect the sliding gesture for unlocking the handheld device 100 generated by the user and update content of the indication data displayed on the first position according to the screen position that the user finger slides to. It is understood that the indication data may comprise texts, graphs, motion pictures or any combination thereof. For example, the indication data includes a percentage data and the percentage data represents the unlocking status in response to the detected contact position where the sliding gesture contacts the touch display unit 110. That is, the percentage data can represent the unlocking status from 0% to 100%, such as 0%, 30, 50%, 70%, 90%, 100%, wherein 0% represents that the unlocking process is beginning, 50% representing that one half of the unlocking process has been completed, 100% represents that the unlocking process has been fully completed. Therefore, the user can intuitively determine the current unlocking status based on the percentage data displayed and determine the unlocking progress based on the current unlocking status. In one embodiment, the indication data may be displayed on a fixed position of the lock screen 200 initially, and then responsive data may be displayed according to the sliding gesture.

In this step, the processing unit 120 may detect a touch on the touch display unit 110 and determine whether the touch is a sliding gesture input. When the touch is determined as the sliding gesture input, the processing unit 120 receives the gesture inputted on the touch display unit 110. Note that users are able to input a sliding gesture via a movement of at least one object (input tool), such as a pen/stylus or finger near or on the touch-sensitive surface. It is to be noted that the processing unit 120 may detect the sliding gesture on the first region 210 by determining whether a continuous movement on the first region 210 of the touch display unit 110 corresponding to the touch has occurred.

In one embodiment, the processing unit 120 may further detect the sliding gesture on the first region 210 by detecting whether a continuous movement with a moving distance exceeding a predetermined distance on the first region 210 or detecting whether the continuous movement has moved to a specific position, wherein the predetermined distance and the specific position can be fixed or be adjusted via proper configurations. For example, if the predetermined distance is defined as 5 centimeters (cm), the processing unit 120 may determine whether a continuous movement with a moving distance exceeding 5 cm on the first region 210 has occurred to determine whether the unlocking operation has been successfully completed.

After detecting the sliding gesture on the first region 210 and displaying responsive indication data on the fixed first position of the second region 220 in response to the detected sliding gesture, in step S206, the processing unit 120 then determines whether to unlock the handheld device 100 according to the indication data. Note that the step where the processing unit 120 determines whether to unlock the handheld device 100 according to the indication data may further include the processing unit 120 keeping the handheld device 100 locked when the indication data indicates that the unlocking process has not yet completed (e.g. the indication data represents a percentage value smaller than 100%) and the processing unit 120 unlocking the handheld device 100 when the indication data indicates that the unlocking process has been fully completed (e.g. the indication data represents a percentage value equal to 100%). For example, after the handheld device 100 is unlocked, the processing unit 120 may restore the screen desktop, restore the screen previously displayed prior to entering the lock status or any pre-configured screens.

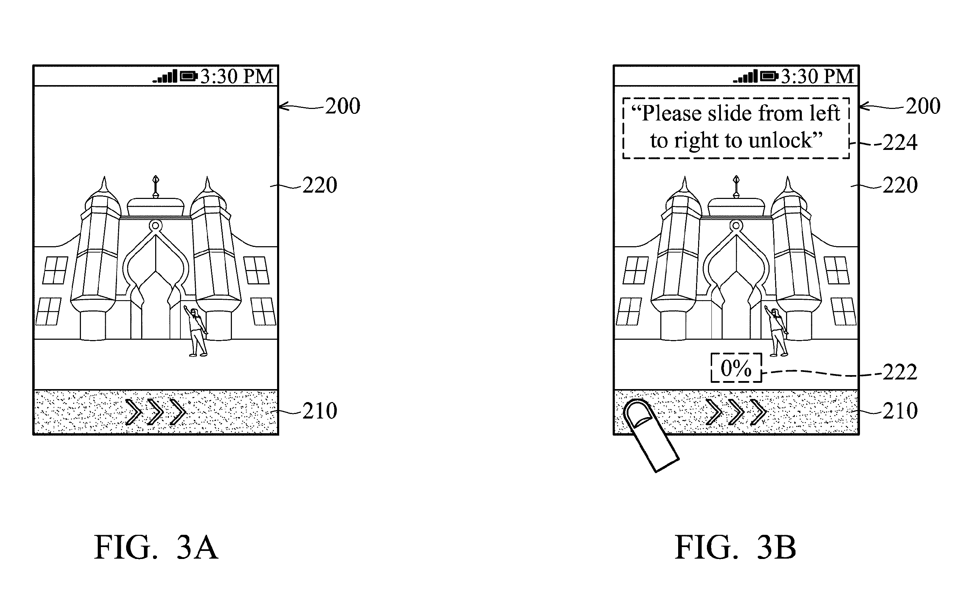

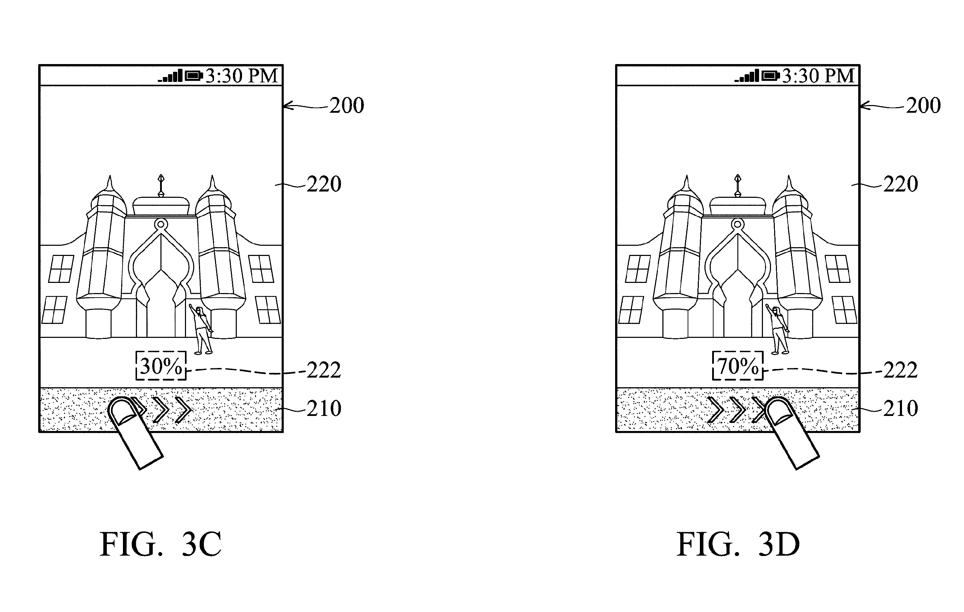

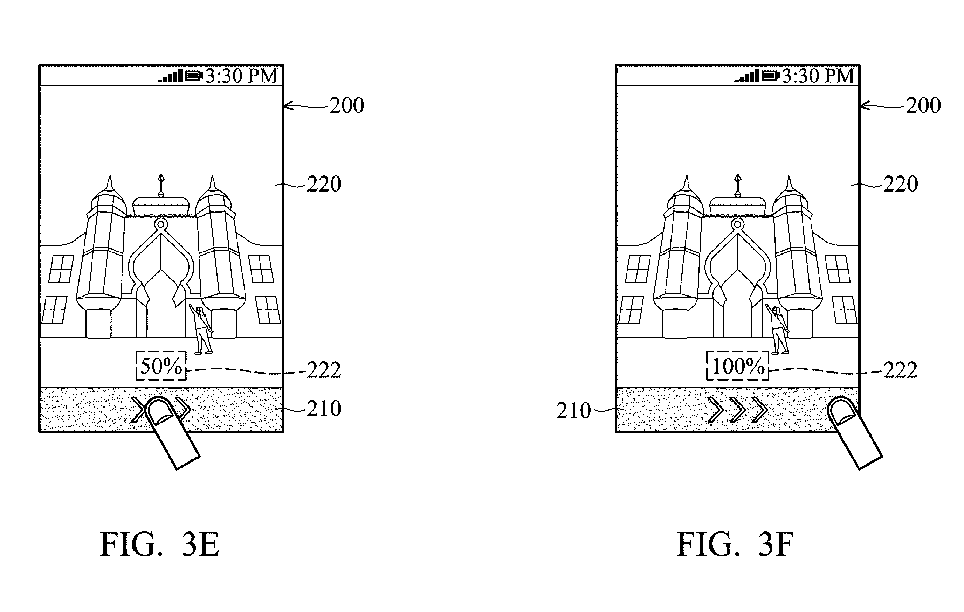

In some embodiments, the processing unit 120 may further display an unlocking indication on a second position of the second region 220 when detecting a contact on the touch display unit 110 for informing/prompting the user about how to unlock the handheld device 100. For example, upon detecting a contact on the touch display unit 110 that is in the lock status, the processing unit 120 may first display the first region 210 on the contact position and display an unlocking indication with the text "Please slide from left to right to unlock" on another position of the second region 220 at the same time to inform the user that the handheld device 100 can be unlocked via a sliding gesture from left to right as shown from Figs. 3B to 3F.

For example, please refer to Figs. 3A to 3F. Figs. 3A to 3F are schematic diagrams illustrating an embodiment of an example of user operations and lock screen changes of the invention. In this embodiment, the indication data is exemplified by percentage data. First, as shown in Fig. 3A, the hand-held device 100 displays a lock screen 200 in the lock state in which the lock screen 200 contains both a first region 210 and a second region 220. Thereafter, the user then touches the first region 210 of lock screen 200 with the finger for unlocking. Meanwhile, the processing unit 120 detects a touch on the first region 210 of the touch display unit 110 and thus displays the percentage indication data 222 represented in text on the specific first location of the second region 220 in the lock screen 200 and displays an unlocking indication 224 on the second location of the second region 220 in the lock screen 200 at the same time to inform/remind the user how to unlock the hand-held device 100, as shown in Fig. 3B.

Thereafter, the processing unit 120 may continually detect whether the finger has a continuous movement to generate a sliding gesture and then respectively display the percentage data 222 as shown in Figs. 3C-3F according to the distance that the user moves the finger and the contact position of the finger on the touch display unit 110. The user can intuitively determine the current unlocking status based on the percentage data displayed. For example, if the percentage data shown in Fig. 3C is "30%", the user can intuitively determine that about one third of the unlocking process has been completed based on the indication data displayed (percentage data). In other words, the data of the percentage data 222 displayed in the first position will be updated based on the distance the user drags the finger. Therefore, the user can determine the unlocking progress based on the indication data displayed.

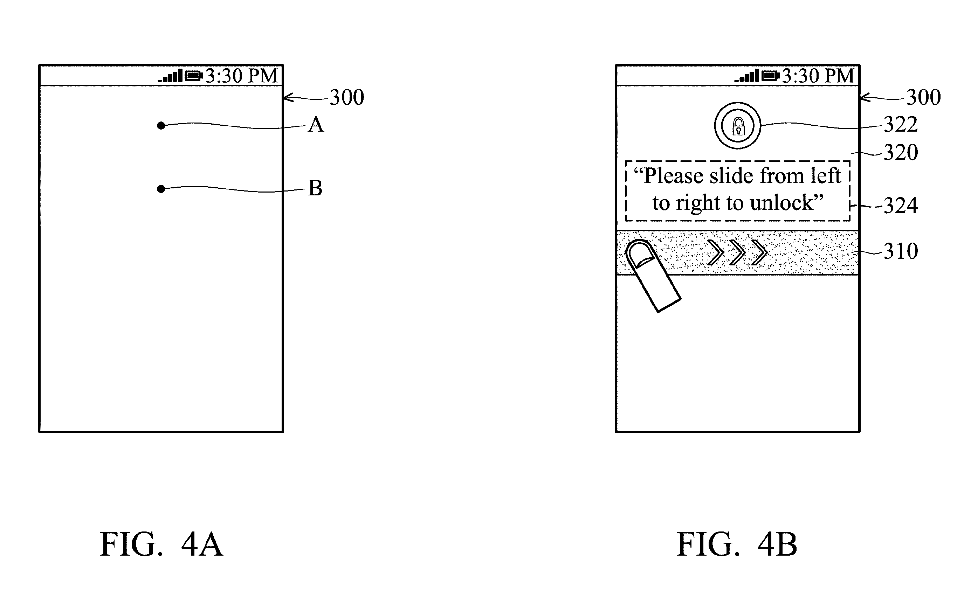

In another embodiment, the indication data includes a graphical data and the graphical data represents the unlocking status in response to the detected contact position where the sliding gesture contacts the touch display unit 110. For example, if a predefined sliding gesture is a gesture sliding from left to right with a distance of 5 cm, the graphical data may vary the content displayed according to a ratio of a distance between an initial contact position and the current contact position and the predetermined distance, as shown from Figs. 4A to 4F.

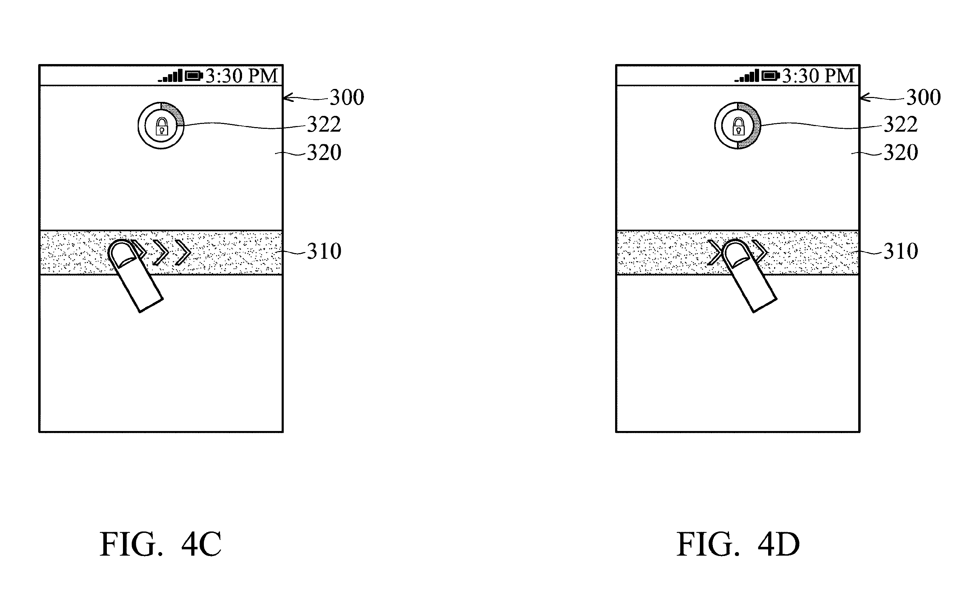

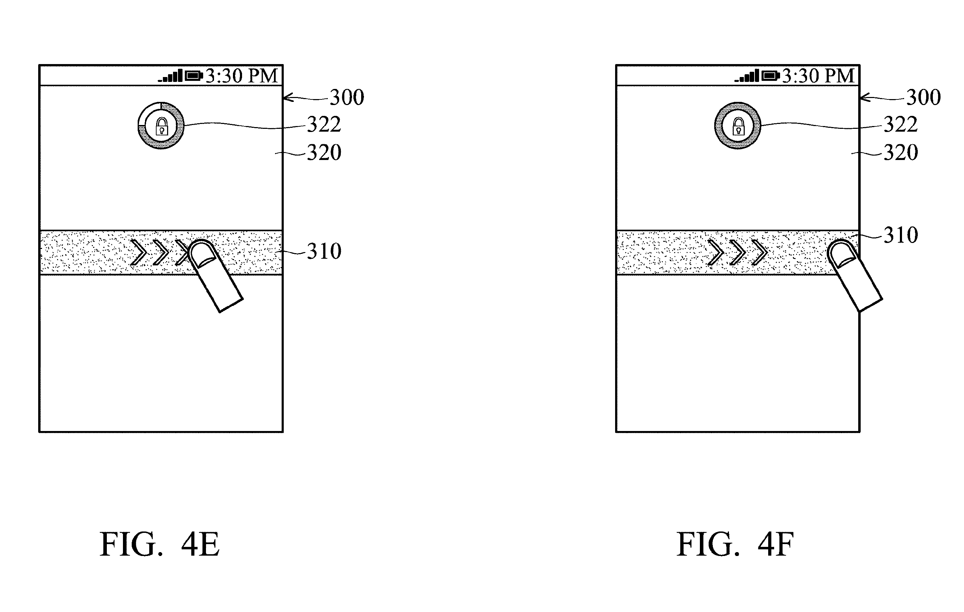

Fig. 4A is a schematic diagram illustrating another embodiment of a lock screen of the lock status of the invention. When the user touches the lock screen displayed on the touch display unit 110 when the handheld device 100 is in the lock status, a graphical data 322 is displayed on a position A and an unlocking indication 324 with text "Please slide from left to right to unlock" is displayed on a position B as shown in Fig. 4A. Meanwhile, the circles within the graphical data 322 are all set to be a white color to indicate that the unlocking process is starting. When the distance that the user slides the finger on the region 310 changes, the display content of the graphical data 322 displayed on the position A will be updated accordingly, as shown from Figs. 4B to 4F. When the display content of the graphical data 322 displayed on the position A is the same as that of the graphical data 322 shown in Fig. 4F, which indicates that the unlocking process has been completed, the processing unit 120 unlocks the handheld device 100 to set the handheld device 100 to the unlock status so as to allow users to use the handheld device 100. When a sliding distance corresponding to the sliding gesture does not exceed the predetermined distance, the display content of the graphical data 322 will represent that the unlocking process has not be completed (such as: the graphical data 322 shown in Fig. 4C, 4D or 4E) and thus the processing unit 120 will keep the handheld device 100 locked.

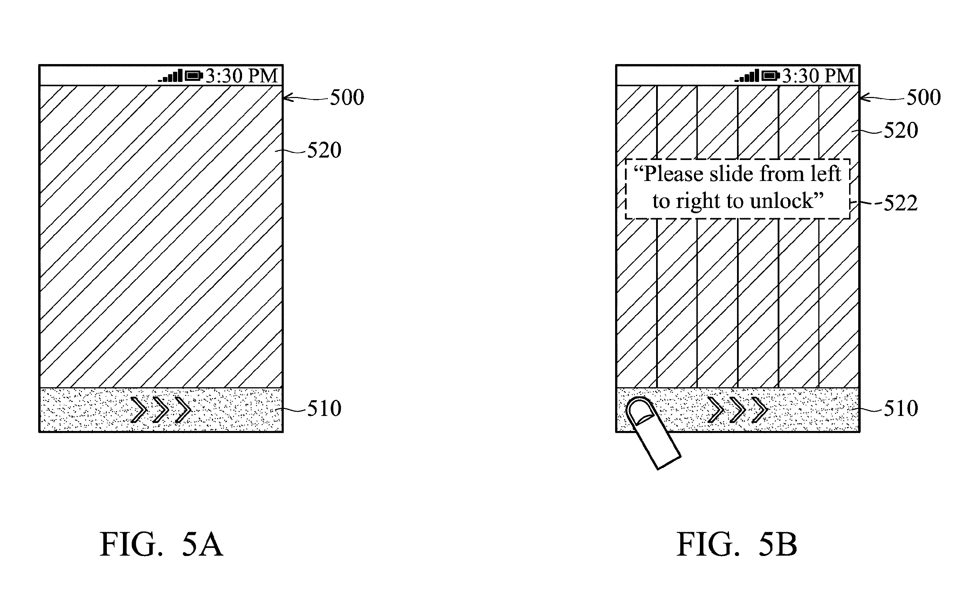

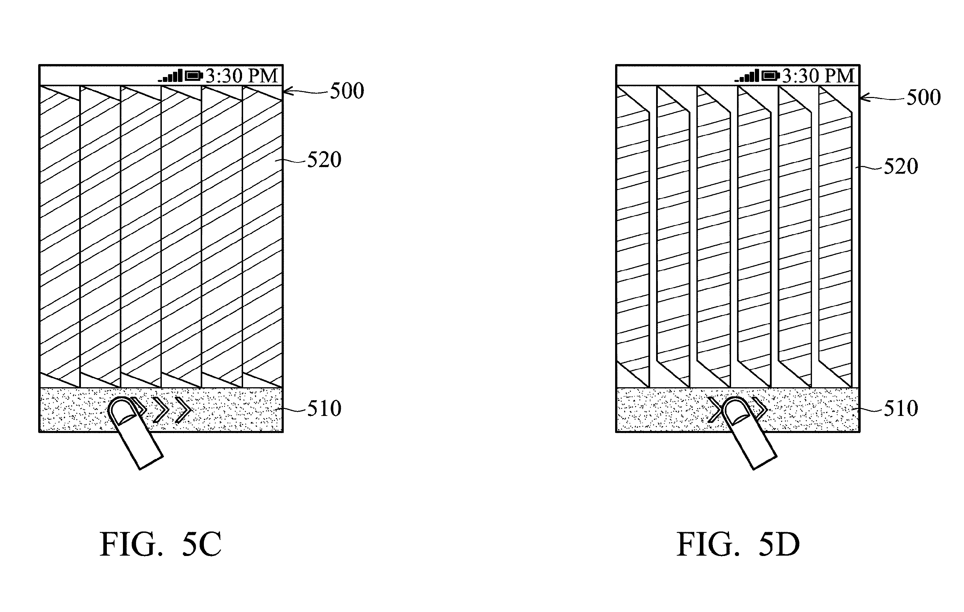

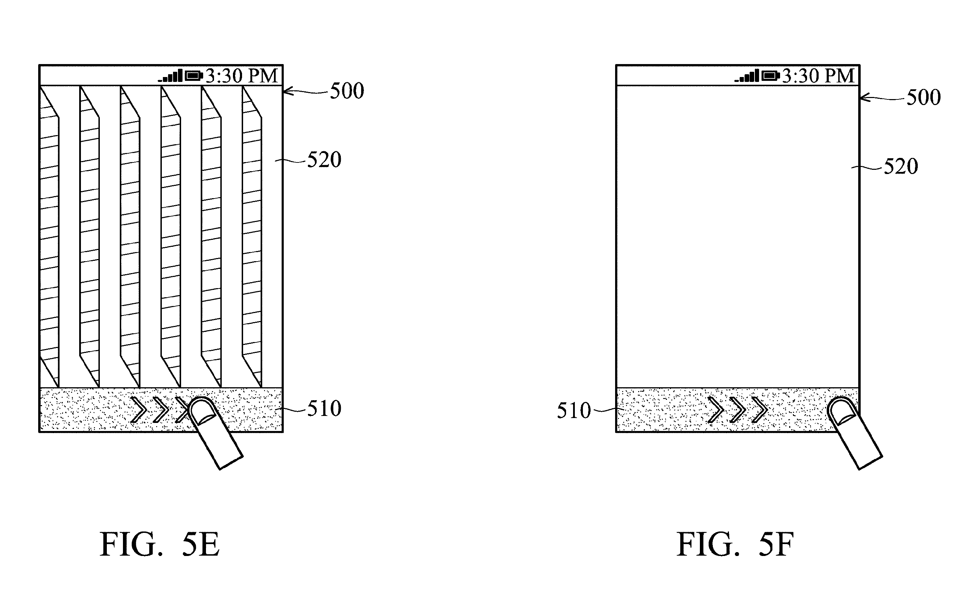

In some embodiments, the second region may further include a wallpaper that fills the entire second region, and the indication data is the wallpaper. The wallpaper may display the unlocking state by the screen changing the wallpaper in response to the contact position where the sliding gesture contacts the touch display unit 110. The indication data can be the entire wallpaper other than the first region. Additionally, the screen of the wallpaper may be varied according to the position of the finger sliding on the wallpaper and the distance that the finger slides thereon to inform the user about the unlocking state. Please refer to Fig. 5A-5E. Figs. 5A to 5E are schematic diagrams illustrating another embodiment of user operations and variation in the indication data of the lock screen of the invention. As shown in Fig. 5A, the handheld device 100 is in the lock status, and the touch display unit 110 shows the preset lock screen 500, which includes a first region 510 where the user inputs sliding gestures and a wallpaper 520. In this embodiment, the indication data is the entire wallpaper 520. When the user wishes to unlock the handheld device 100, the user touches the first region 510 with the finger and the wallpaper 520 displays an unlocking indication 522 including the text "please slide from left to right to unlock." When the user follows the instruction of the unlocking indication 522 and begins to slide the finger, display of the wallpaper 520 will change into the shutter screens shown in Fig. 5B. Moreover, when the position the finger slides, the wallpaper 520 will display the corresponding shutter opening screens of different angles as shown in Figs. 5B-5F. When the user finishes sliding of the finger and if the wallpaper 520 shows the shutter opening in Fig. 5F, which indicates that the unlocking process has been completed, the handheld device 100 will be unlocked. Meanwhile, the touch display unit 110 will display the preset homepage desktop or related operating screens of designated applications. Assuming at the end of the sliding movement of the user, the shutter opening screen shown in Fig. 5F does not appear, which indicates that the unlocking process has not been completed, the handheld device 100 will remain in the lock status and the lock screen 500 will display again to wait for the user to request to unlock. Similarly, the user can determine the unlocking state and determine whether or not the unlocking process has been successfully completed through similar animated screen changes on the wallpaper 520 during the unlocking process, thereby enhancing the fun of operation of the user.

It is to be understood that, in the above-mentioned embodiments, during the user's sliding operation in the first region, the display of the first region will not be changed and no objects in the first region will be moved. Moreover, the above-mentioned sliding gestures can be sliding gestures in any designated directions. For example, the sliding gesture can be a sliding gesture from right to left, from up to bottom or from upper left to lower right. In some embodiments, the sliding gestures in different directions that correspond to one unlocking screen can be further defined. For example, the left to right sliding gesture may be defined to correspond to the operation interface of a first application while the right to left sliding gesture may be defined to correspond to the operation interface of a second application, and the unlocking indication may display the application related information corresponding to the supported sliding gestures. In this case, the processing unit can further determine the content displayed on the touch display unit 110 after the handheld device is unlocked based on the direction of the user's sliding gesture. Note that although a fixed unlocking position was used as an example among the above-mentioned embodiments, the invention is not limited thereto. For example, in some embodiments, the unlocking position may not be fixed, or may be defined by the user.

In some other embodiments, when the processing unit 120 detects a contact on any position of the touch display unit 110, it may divide the wallpaper of the lock screen into a plurality of sub-screens. Then, the plurality of sub-screens may be rotated/flipped with a sliding gesture corresponding to the contact to indicate the unlocking status, wherein the wallpaper of the lock screen may represent rotating/flipping statuses of the plurality of sub-screens with different angles to indicate the unlocking status in response to a detected contact position on the touch display unit 110 corresponding to the sliding gesture. In this embodiment, the indication data is the entire wallpaper and the screen of the wallpaper may represent different rotating effect variations of the plurality of sub-screens according to the position of the finger sliding on the wallpaper and the distance that the finger slides thereon to inform the user about the unlocking status. For example, all of the sub-screens can be rotated simultaneously or be rotated in order, but the invention is not limited thereto.

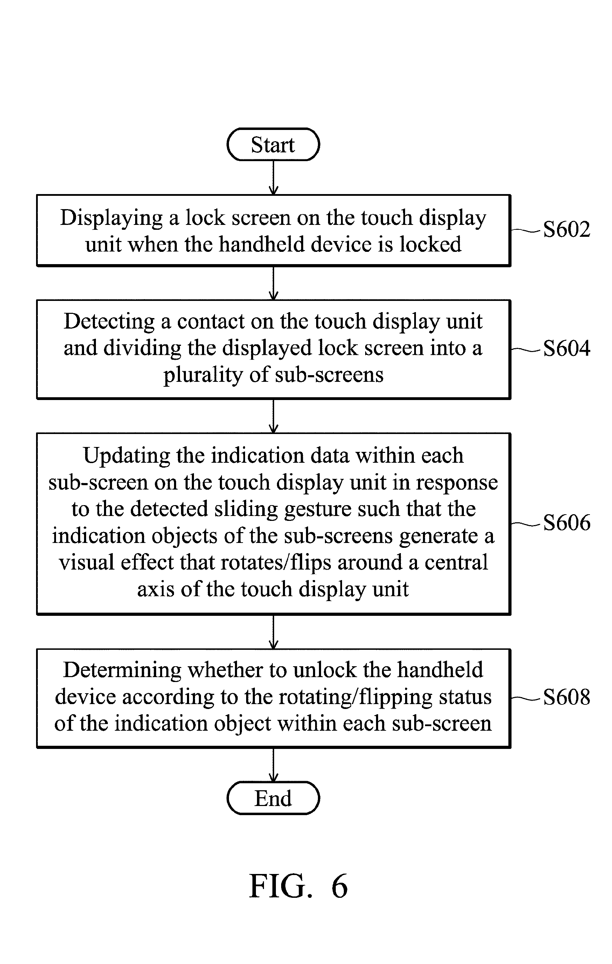

Fig. 6 is a flowchart of another embodiment of a controlling method of the handheld device of the invention. Please refer to Figs. 1 and 6. The controlling method can be applied to a handhand device, such as a portable device, e.g. a PDA, a PDA phone, a smart phone, a mobile phone, an MID, a laptop computer, a tablet computer, a car computer, a digital camera, a multi-media player, a game device, or any other type of handheld device. However, it is to be understood that the invention is not limited thereto. It is to be noted that, in this embodiment, the handheld device 100 comprises a touch display unit 110 and a processing unit 120, wherein the handheld device 100 is in the lock status.

First, in step S602, the processing unit 120 displays a lock screen 700 on the touch display unit 110, wherein the lock screen 700 includes a wallpaper 710. Similarly, when the handheld device 100 has been locked, the processing unit 120 detects operations of a user of the handheld device 100, such as determining whether any finger has touched the touch display unit 110, and when detecting the operations of the user of the handheld device 100, determines whether it represents an unlock operation. Assume that the user wishes to use the handheld device 100 after it has been locked, as the handheld device 100 is in the lock status, the user has to unlock the handheld device 100 to perform operations on the handheld device 100. Thus, the user may contact the touch display unit 110 with the finger to request to perform the unlock operation.

Accordingly, in step S604, when the handheld device 100 is locked, the processing unit 120 detects a contact on the touch display unit 110 and divides the displayed lock screen 700 into a plurality of sub-screens 701-706. For example, the processing unit 120 may equally divide the lock screen 700 into a predetermined amount of sub-screens 701-706. In other words, the sub-screens 701-706 are represented in a form of shutters. In this embodiment, each sub-screen can be referred to as an indication data and each sub-screen includes a indication object.

Thereafter, in step S606, the processing unit 120 updates the indication data within each sub-screen on the touch display unit 110 in response to the detected sliding gesture such that the indication objects of the sub-screens generate a visual effect that rotates/flips around a central axis of the touch display unit 110. Note that the displayed indication data includes an indication object of each sub-screen and the indication object rotates/flips around a central axis of the touch display unit 110 in response to a detected contact position corresponding to the sliding gesture, wherein a rotating/flipping status of the indication object indicates an unlocking status for the handheld device 100. In other words, the processing unit 120 may detect the sliding gesture for unlocking the handheld device 100 generated by the user and update the rotating/flipping status of the indication object displayed on each sub-screen according to the screen position that the user finger slides to. For example, the indication data can represent the unlocking status from 0% to 100% by displaying responsive rotation images with various rotation angles corresponding to the indication object, such as a rotation image with a rotation angle of 45 degrees representing that one fourth of the unlocking process has been completed, a rotation image with a rotation angle of 90 degrees representing that one half of the unlocking process has been completed, and a rotation image with a rotation angle of 180 degrees representing that the unlocking process has been fully completed. Therefore, the user can intuitively determine the current unlocking status based on the rotating/flipping status of the indication object displayed while inputting the sliding gesture and determine the unlocking progress based on the current unlocking status.

In this step, the processing unit 120 may detect a touch on the touch display unit 110 and determine whether the touch is a sliding gesture input. When the touch is determined as the sliding gesture input, the processing unit 120 receives the gesture inputted on the touch display unit 110. Note that users are able to input a sliding gesture via a movement of at least one object, such as a pen/stylus or finger near or on the touch-sensitive surface. It is to be noted that the processing unit 120 may detect the sliding gesture on the touch display unit 110 by determining whether a continuous movement on the touch display unit 110 corresponding to the touch has occurred.

After detecting the sliding gesture on the touch display unit 110 and displaying responsive indication data in response to the detected sliding gesture, in step S608, the processing unit 120 then determines whether to unlock the handheld device 100 according to the rotating/flipping status of the indication object within each sub-screen. Note that the step where the processing unit 120 determines whether to unlock the handheld device 100 according to the rotating/flipping status of the indication object within the indication data of each sub-screen may further include determining whether an angle that the indication object rotates/flips around the central axis of the touch display unit has exceeded a designated angle. In some embodiments, the designated angle is set to be 180 degrees. When the angle that the indication object rotates around the central axis of the touch display unit has exceeded a designated angle, which indicates that the unlocking process has been fully completed, the processing unit 120 unlocks the handheld device 100 or activates an application corresponding to the indication object. For example, if the indication object represents a notifying dialog box of a missed incoming call, the application corresponding to the indication object is a dialer application.

When the angle that the indication object rotates around the central axis of the touch display unit has not exceeded the designated angle, e.g. the rotation angle is 90 degrees, which indicates that the unlocking process has not been completed, the processing unit 120 keeps the handheld device 100 locked. For example, after the handheld device 100 is unlocked, the processing unit 120 may restore the screen desktop, the screen previously displayed prior to entering the lock status or any pre-configured screens. In some embodiments, the indication object may further comprise a first surface and a second surface, and when the indication object is rotated from the first surface to the second surface, such as being rotated from the front side of the indication object to its flip side, the handheld device 100 is unlocked or the application corresponding to the indication object is activated after the handheld device 100 is unlocked.

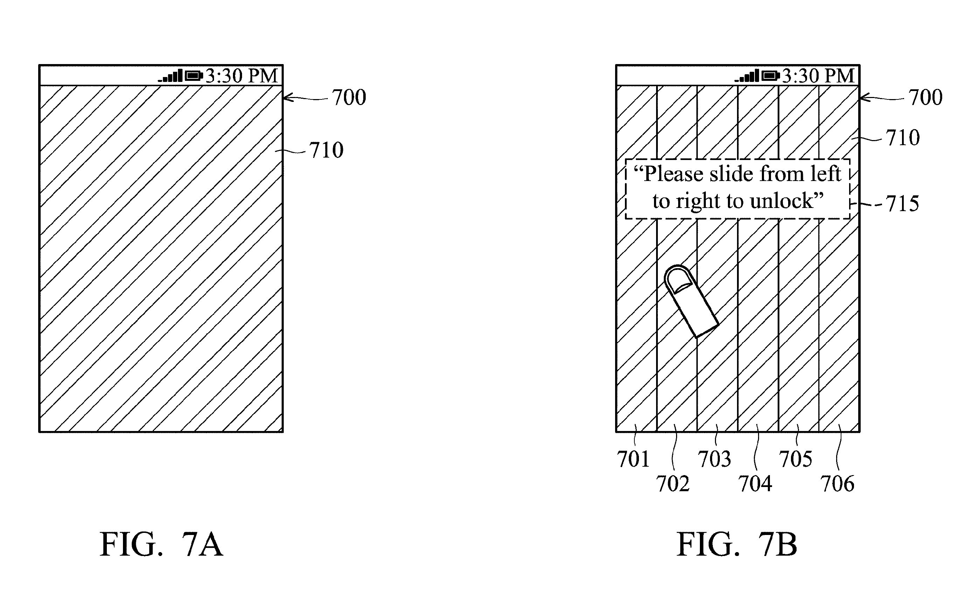

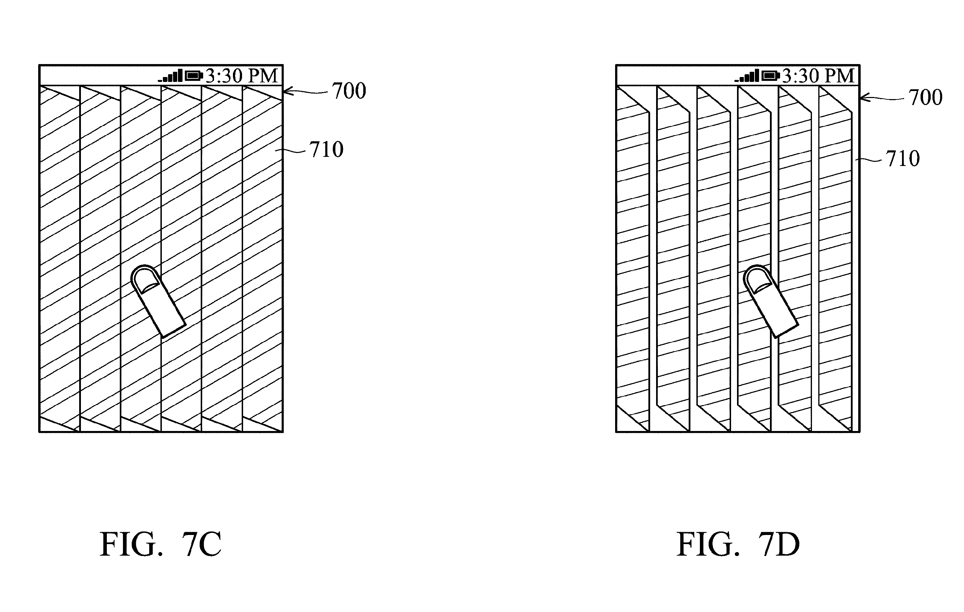

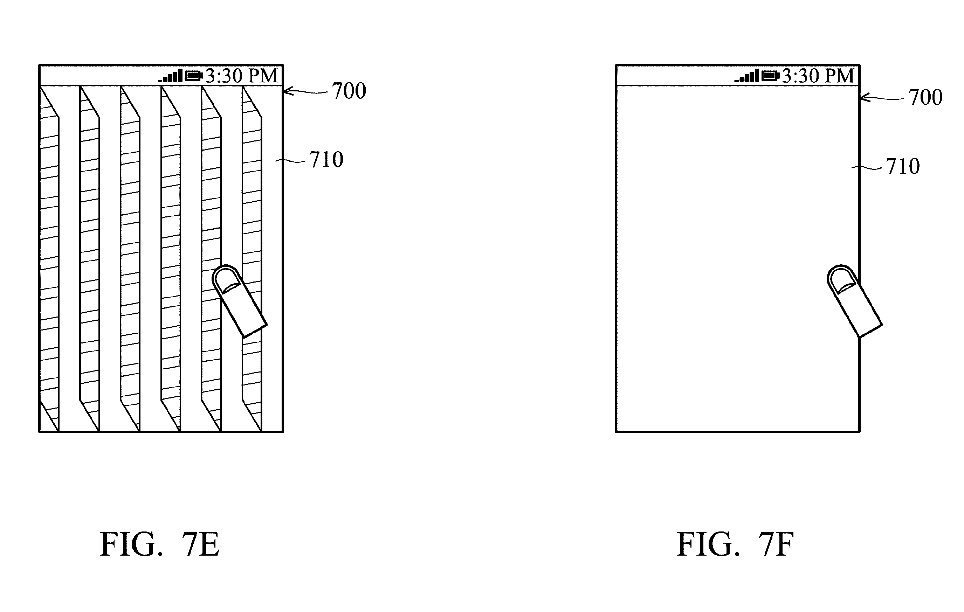

In some embodiments, the processing unit 120 may further display an unlocking indication on the touch display unit 110 when detecting a contact on the touch display unit 110 for informing/prompting the user about how to unlock the handheld device 100. For example, upon detecting a contact on the touch display unit 110 in the lock status, the processing unit 120 may first display the indication data on the contact position and display an unlocking indication with text "Please slide from left to right to unlock" on another position at the same time to inform the user that the handheld device 100 can be unlocked via a sliding gesture from left to right as shown from Figs. 7B to 7F.

Please refer to Figs. 7A to 7F. Figs. 7A to 7F are schematic diagrams illustrating another embodiment of an example of a user's unlocking operation and lock screen changes of the invention. As shown in Fig. 7A, the handheld device 100 is in the lock status and the touch display unit 110 shows a preset lock screen 700, wherein the lock screen 700 includes a wallpaper 710. When the user wishes to unlock the handheld device 100, the user touches any position of the wallpaper 710 with the finger such that the wallpaper 700 is divided into a plurality of sub-screens 701-706. In this embodiment, the indication data is each sub-screen. Meanwhile, the wallpaper 700 displays an unlocking indication 715 including the text "please slide from left to right to unlock." When the user follows the instruction of the unlocking indication 715 and begins to slide the finger, display of the wallpaper 710 will change into the shutter screens shown in Fig. 7B. Moreover, when the position the finger slides, the wallpaper 710 will display the corresponding shutter opening screens of different angles as shown in Figs. 7B-7F. In this example, each slice of the shutter screen can be referred to as a sub-screen. When the user finishes sliding of the finger and if the wallpaper 710 shows the shutter opening in Fig. 7F, which indicates that the unlocking process has been completed, the handheld device 100 will be unlocked. Meanwhile, the touch display unit 110 will display the preset homepage desktop or related operating screens of designated applications. Assuming at the end of the sliding movement of the user, the shutter opening screen shown in Fig. 7F does not appear, which indicates that the unlocking process has not been completed, the handheld device 100 will remain in the lock status and the lock screen 700 will display again to wait for the user to request to unlock. Similarly, the user can determine the unlocking status and determine whether or not the unlocking process has been successfully completed through the rotating/flipping status of the indication object represented on the wallpaper 710 during the unlocking process, thereby enhancing the fun of operation of the user.

In some embodiments, the entire wallpaper 710 can be rotated in response to the sliding gesture and the user can determine the unlocking status and determine whether or not the unlocking process has been successfully completed through the rotating/flipping status of the wallpaper 710 during the unlocking process. In one embodiment, the screen desktop, the screen previously displayed prior to entering the lock status or any pre-configured screens can be set as the background image of the wallpaper 710 and a portion of the screen of the background image will be displayed when the wallpaper rotates. When all of the screen of the background image is displayed, which indicates that the unlocking process has been completed, the handheld device 100 will be unlocked and entire background image will be displayed on the touch display unit 110.

In some other embodiments, the lock screen may provide a number of touchable objects and the user may perform the aforementioned unlocking operation on the specific objects on the lock screen to display the operation screen related to a dedicated application or activate a dedicated application. Note that the touchable object may be a notify dialog box, application symbols, icons, or shortcuts, but the invention is not limited thereto.

When the processing unit 120 detects a contact on any position of the touch display unit 110, it may divide the wallpaper of the lock screen into a plurality of sub-screens. Then, the plurality of sub-screens may be rotated/flipped with a sliding gesture corresponding to the contact to indicate the unlocking status, wherein the wallpaper of the lock screen may represent rotating/flipping statuses of the plurality of sub-screens with different angles to indicate the unlocking status in response to a detected contact position on the touch display unit 110 corresponding to the sliding gesture. In this embodiment, the indication data is the entire wallpaper and the screen of the wallpaper may represent different rotating effect variations of the plurality of sub-screens according to the position of the finger sliding on the wallpaper and the distance that the finger slides thereon to inform the user about the unlocking status. For example, all of the sub-screens can be rotated simultaneously or be rotated in order, but the invention is not limited thereto.

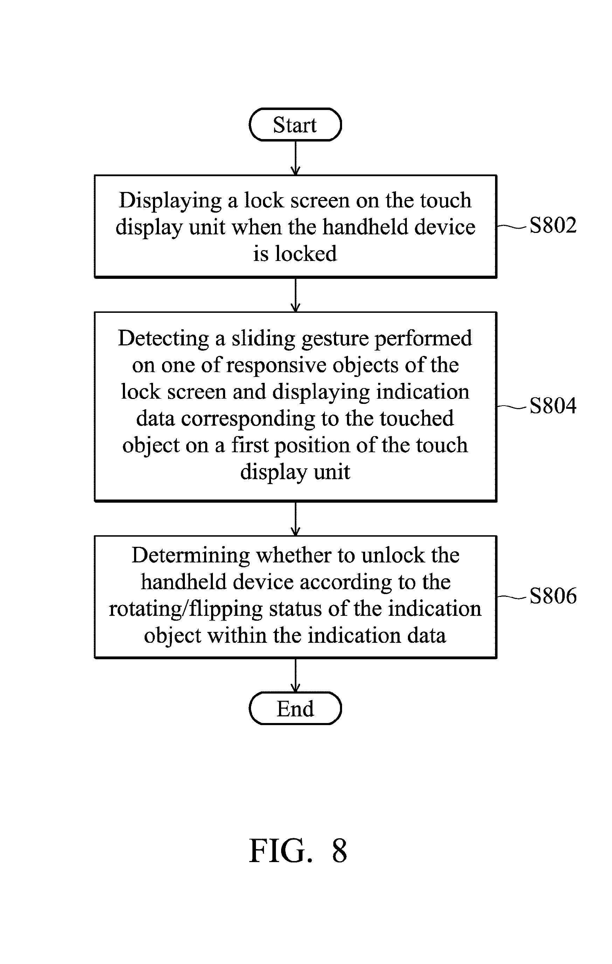

Fig. 8 is a flowchart of another embodiment of a controlling method of the handheld device of the invention. Please refer to Figs. 1 and 8. The controlling method can be applied to a handheld device, such as a portable device, e.g. a PDA, a PDA phone, a smart phone, a mobile phone, an MID, a laptop computer, a tablet computer or any other type of handheld device. However, it is to be understood that the invention is not limited thereto.

First, in step S802, the processing unit 120 displays a lock screen 900 on the touch display unit 110, wherein the lock screen 900 includes one or more touchable objects 901-905, and each of the touchable objects 901-905 correspond to a specific application.

Thereafter, in step S804, when the handheld device 100 is locked, the processing unit 120 detects a sliding gesture performed on one of the touchable objects 901-905 of the lock screen 900 (e.g. the object 901) and thus displays indication data corresponding to the detected touchable object on a first position of the touch display unit 110. Note that the displayed indication data includes a indication object which rotates/flips around a central axis of the touch display unit 110 in response to the sliding gesture and a rotating/flipping status of the indication object indicating an unlocking status for the handheld device 100. In other words, the processing unit 120 may detect the sliding gesture for unlocking the handheld device 100 generated by the user and update the rotating/flipping status of the indication object within the indication data displayed on the first position according to the screen position that the user finger slides to. For example, the indication object of the indication data can represent a visual rotation effect that rotates from 0 degrees to 180 degrees, such as a rotation effect of rotating the indication object with 0 degrees, 90 degrees, 120 degrees and 180 degrees, wherein the rotation effect of rotating the indication object with 0 degrees represents that the unlocking process is beginning, a rotation effect of rotating the indication object with 90 degrees represents that one half of the unlocking process has been completed, a rotation effect of rotating the indication object with 180 degrees represents that the unlocking process has been fully completed. Therefore, the user can intuitively determine the current unlocking status based on the rotating/flipping status of the indication object displayed by the indication data while inputting the sliding gesture and determine the unlocking progress based on the current unlocking status.

In this step, the processing unit 120 may detect a touch on the touch display unit 110 and determine whether the touch is a sliding gesture input corresponding to one of the touchable objects. When the touch is determined as the sliding gesture input corresponding to one of the touchable objects, the processing unit 120 receives the gesture inputted on the touch display unit 110. Similarly, users are able to input a sliding gesture via a movement of at least one object, such as a pen/stylus or finger near or on the touch-sensitive surface. It is to be noted that the processing unit 120 may detect the sliding gesture on the touch display unit 110 by determining whether a continuous movement on the touch display unit 110 corresponding to the touch has occurred. For example, if the predetermined distance is defined as 5 cm, the processing unit 120 may determine whether a continuous movement with a moving distance exceeding 5 cm on the first region 210 has occurred to determine whether the unlocking operation has been successfully completed.

After detecting the sliding gesture on the first region 210 and displaying responsive indication data on the first position in response to the detected sliding gesture, in step S806, the processing unit 120 then determines whether to unlock the handheld device 100 according to the rotating/flipping status of the indication object within the indication data. Note that the step where the processing unit 120 determines whether to unlock the handheld device 100 according to the rotating/flipping status of the indication object within the indication data may further include the processing unit 120 keeping the handheld device 100 locked when the indication data indicates that the unlocking process has not yet completed (e.g. the rotation angle of the indication object within the indication data has not exceeded 180 degrees) and the processing unit 120 unlocking the handheld device 100 when the indication data indicates that the unlocking process has been fully completed (e.g. the rotation angle of the indication object within the indication data has exceeded 180 degrees). For example, after the handheld device 100 is unlocked, the processing unit 120 may directly display the operation screen related to the dedicated application or activate the dedicated application.

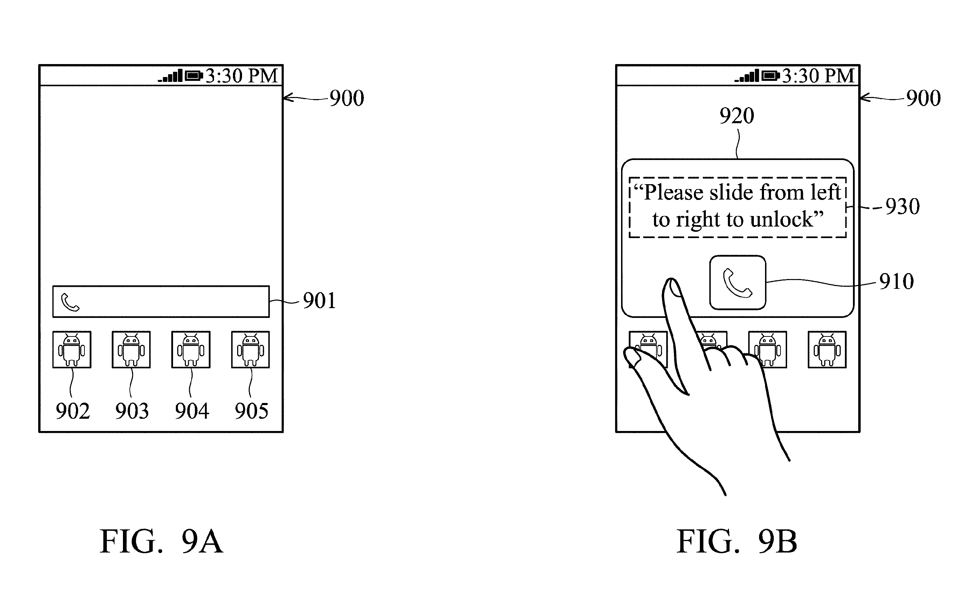

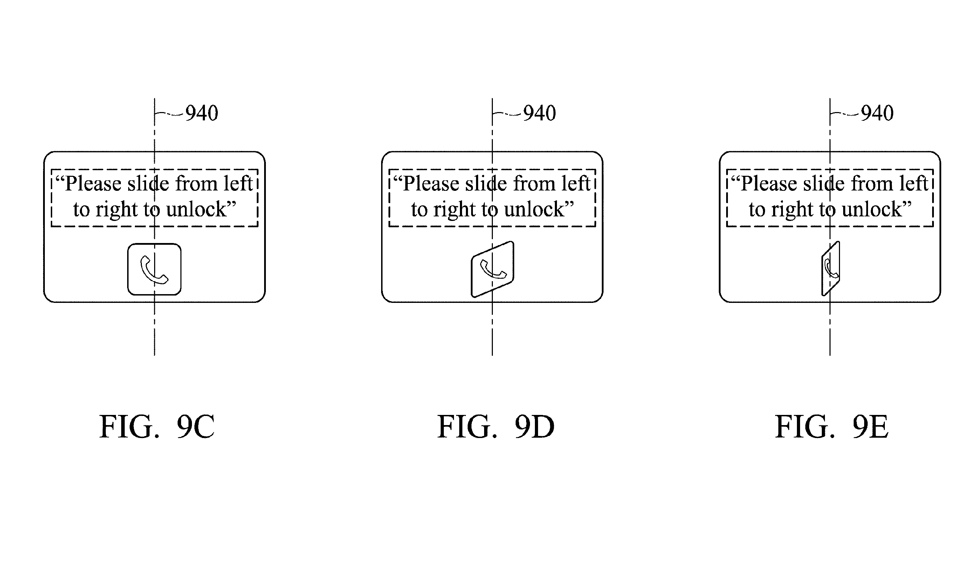

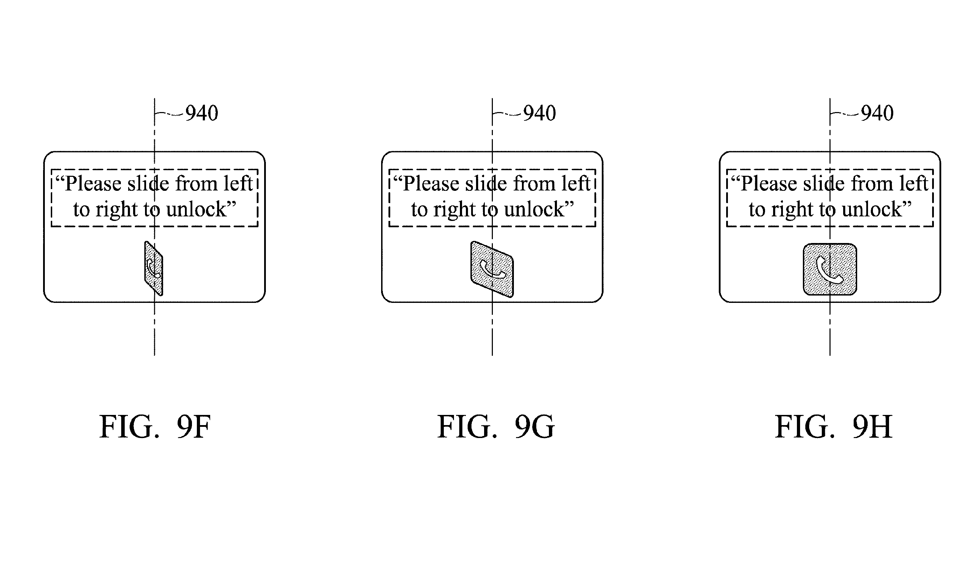

In some embodiments, the processing unit 120 may further display an unlocking indication on a second position of the touch display unit 110 when detecting a contact on the touch display unit 110 for informing/prompting the user on how to unlock the handheld device 100. For example, upon detecting a contact on the touch display unit 110 that is in the lock status, the processing unit 120 may first display an indication data on the contact position and display an unlocking indication with text "Please slide from left to right to unlock" on another position at the same time to inform the user that the handheld device 100 can be unlocked via a sliding gesture from left to right as shown from Figs. 9B to 9H.

For example, please refer to Figs. 9A to 9H. Figs. 9A to 9H are schematic diagrams illustrating another embodiment of an example of user operations and lock screen changes of the invention. In this embodiment, the indication data includes a indication object. First, as shown in Fig. 9A, the hand-held device 100 displays a lock screen 900 in the lock state in which the lock screen 900 includes one or more touchable objects 901-905. Thereafter, the user then touches the object 901 of the lock screen 900 with the finger to perform an unlocking operation. Meanwhile, the processing unit 120 detects a touch on the object 901 of the touch display unit 110 and thus displays the indication data 920 including the indication object 910 on the specific first location in the lock screen 900 and displays an unlocking indication 930 on the second location in the lock screen 900 at the same time to inform/remind the user how to unlock the hand-held device 100, as shown in Fig. 9B. In this embodiment, the indication object 910 is an icon or an application symbol corresponding to the object 901.

Thereafter, the processing unit 120 may continually detect whether the finger has a continuous movement to generate a sliding gesture and then respectively display the indication data 920 as shown in Figs. 9C-9F according to the distance that the user moves the finger and the contact position of the finger on the touch display unit 110. The indication object 910 in the indication data 920 can rotate/flip around a central axis 940 of the touch display unit 110 with a rotation angle from 0 to 180 degrees according to the distance that the user moves the finger. The user can intuitively determine the current unlocking status based on the rotating/flipping status (e.g. the rotation angle) of the indication object 910 displayed by the indication data 920. For example, if the rotation angle of the indication object 910 displayed by the indication data 920 shown in Fig. 9E is 90 degrees, the user can intuitively determine that about one half of the unlocking process has been completed based on the displayed rotation angle of the indication object 910. In other words, the rotation angle of the indication object 910 displayed by the indication data 920 at the first position will be updated based on the distance the user drags the finger. Therefore, the user can determine the unlocking progress based on the indication data displayed. When the indication data 920 indicates that the unlocking process has been fully completed, i.e. the rotation angle of the indication object 910 within the indication data 920 has exceeded 180 degrees (as shown in Fig. 9H), the processing unit 120 unlocks the handheld device 100 and directly displays the operation screen related to the dedicated application corresponding to the object 901 or activates the dedicated application after the handheld device 100 is unlocked. For example, if the object 901 represents a notifying dialog box of a missed incoming call, after the handheld device 100 is unlocked, the processing unit 120 can directly activate the dialer application or provide the operation screen of the dialer application for the user for subsequent use, thereby simplifying the operation procedure of the user.

Therefore, with the handheld devices and related controlling methods of the invention, the user does not need to move any object to engage in the unlocking of the handheld device, and the user can be clearly informed about the unlocking state and whether or not the unlocking process has been successfully completed according to the indication data such as text, percentage or the rotating/flipping status of the indication object displayed by the indication data on the screen, thereby providing an easier and more convenient unlocking method and making user operation more convenient.

Controlling methods, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A controlling method, applied to a handheld device, at least comprising a touch display unit, the controlling method comprising:
detecting a sliding gesture on the touch display unit when the handheld device is locked;
in response to the detected sliding gesture, displaying at least one indication data on the touch display unit, wherein the indication data includes a indication object and the indication object rotates/flips around a central axis of the touch display unit in response to a detected contact position corresponding to the sliding gesture and a rotating/flipping status of the indication object indicating an unlocking status for the handheld device; and
determining whether to unlock the handheld device according to the rotating/flipping status of the indication object,
wherein the handheld device is unlocked or an application corresponding to the indication object is activated when an angle that the indication object rotates/flips around the central axis of the touch display unit has exceeded a designated angle, and the handheld device is kept locked when the angle that the indication object rotated/flipped around the central axis of the touch display unit has not exceeded the designated angle.

2. The controlling method of claim 1, wherein the touch display unit further displays a wallpaper and the indication data is the wallpaper, and the wallpaper is rotated/flipped around the central axis of the touch display unit in response to the sliding gesture.

3. The controlling method of claim 1, wherein the indication object further comprises a first surface and a second surface, and the handheld device is unlocked or the application corresponding to the indication object is activated when the indication object is rotated from the first surface to the second surface.

4. The controlling method of claim 1, wherein the designated angle is 180 degrees.

5. The controlling method of claim 1, further comprising:
displaying an unlocking indication on the touch display unit when displaying the indication data thereon.

6. The controlling method of claim 1, wherein the step of detecting the sliding gesture on the touch display unit comprises determining whether a continuous movement on the touch display unit corresponding to the sliding gesture has occurred, and if so, directing the indication data to display that the handheld device is completely unlocked and unlocking the handheld device.

7. A handheld device, comprising:
a storage unit, comprising at least one lock screen;
a touch display unit; and
a processing unit, arranged for detecting a sliding gesture on the touch display unit when the handheld device is locked, displaying at least one indication data on the touch display unit in response to the detected sliding gesture, wherein the indication data includes a indication object which rotates/flips around a central axis of the touch display unit in response to a detected contact position corresponding to the sliding gesture and a rotating/flipping status of the indication object indicating an unlocking status for the handheld device, and determining whether to unlock the handheld device according to the rotating/flipping status of the indication object,
wherein the processing unit further unlocks the handheld device or activates an application corresponding to the indication object when the angle that the indication object has rotated/flipped around the central axis of the touch display unit has exceeded a designated angle, and the processing unit keeps the handheld device locked when the angle that the indication object rotated/flipped around the central axis of the touch display unit has not exceeded the designated angle.

8. The handheld device of claim 7, wherein the touch display unit further displays a wallpaper and the indication data is the wallpaper, and the wallpaper is rotated/flipped around the central axis of the touch display unit in response to the sliding gesture.

9. The handheld device of claim 7, wherein the indication object further comprises a first surface and a second surface, and the handheld device is unlocked or the application corresponding to the indication object is activated when the indication object is rotated from the first surface to the second surface.

10. The handheld device of claim 7, wherein the designated angle is 180 degrees.

11. The handheld device of claim 7, wherein the touch display unit further displays an unlocking indication on the touch display unit when displaying the indication data thereon.

12. The handheld device of claim 7, wherein the processing unit determines whether a continuous movement on the touch display unit corresponding to the sliding gesture has occurred, and if so, directs the indication data to display that the handheld device is completely unlocked and unlocks the handheld device.
